(19) Europäisches Patentamt European Patent Office Office européen des brevets

(11) **EP 4 425 134 B1**

(12) **EUROPEAN PATENT SPECIFICATION**

(45) Date of publication and mention
of the grant of the patent:
**22.10.2025   Bulletin 2025/43**

(21) Application number: **24153571.5**

(22) Date of filing: **24.01.2024**

(51) International Patent Classification (IPC):
*G01F 1/69* *(2006.01)*          *G01F 1/698* *(2006.01)*
*G01F 1/699* *(2006.01)*         *G01K 7/42* *(2006.01)*
*F24F 11/30* *(2018.01)*         *G01K 13/024* *(2021.01)*

(52) Cooperative Patent Classification (CPC):
**G01K 13/024; F24F 11/30; G01F 1/69;
G01F 1/6986; G01F 1/699; G01K 7/42;**
G01K 2201/00

(54) **AIR FLOW COMPENSATED TEMPERATURE TRANSMITTER AND MEASURING METHOD**

LUFTSTROMKOMPENSIERTER TEMPERATURSENDER UND MESSVERFAHREN

TRANSMETTEUR DE TEMPÉRATURE À COMPENSATION DE DÉBIT D'AIR ET PROCÉDÉ DE MESURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **28.02.2023   FI 20235241**

(43) Date of publication of application:
**04.09.2024   Bulletin 2024/36**

(73) Proprietor: **Produal Oy**
**48770 Kotka (FI)**

(72) Inventors:
• **Ilmasti, Aki**
**01390 Vantaa (FI)**
• **Varila, Tommi**
**40250 Jyväskylä (FI)**
• **Hyvönen, Ilkka**
**01390 Vantaa (FI)**

(74) Representative: **Berggren Oy**
**P.O. Box 16**
**Fabianinkatu 21**
**00101 Helsinki (FI)**

(56) References cited:
**EP-B1- 2 899 519     US-A1- 2005 092 078**

# EP 4 425 134 B1

## Description

### Technical field

The present invention relates to an air flow measurement unit for an air flow compensated room temperature transmitter.

The invention also relates to an air flow measuring method and an air flow compensated ambient temperature measuring method, and a computer program product.

### Background

It is always useful to know the temperature of a room, house, or other indoor spaces. This allows to better manage the energy consumption, regulate the temperature and air conditioning and improve living or working comfort. Measuring thermal conditions in indoor spaces may be performed by several different measuring devices, thermometers. In heating, ventilating and air conditioning systems, there is especially a need for a thermometer measuring temperature correctly so that heating, ventilating and air conditioning can be correctly adjusted and controlled in indoor spaces. An example of a measuring device suitable to be used for this purpose is a room temperature transmitter (RTS) that has been designed for wall mounting and is used to sense temperature in indoor spaces.

Existing room temperature transmitters usually have a housing having ventilated openings, a connection terminal printed circuit board (PCB) and a temperature sensing element inside the housing. It measures indoor space temperature using approximation made by two sensors inside the housing.

The first i.e. main sensor of an RTS is usually placed as close to fresh air inside a housing as possible. This is because the sensor cannot be placed outside the housing, it has to be protected from external damages, such as ESD and mechanical stresses. The main sensor is further thermally isolated from the rest of the electronics of the RTS. Usually, the printed circuit board is cut around the main sensor. The second i.e. auxiliary sensor is placed on the printed circuit board with other electronics of the RTS to measure temperature of the printed circuit board.

Internal heating of the RTS i.e. heating of electronics affects the readings of both sensors. Heat is generated on the printed circuit board due power losses in electronics. The heat transfers by convection and conduction to both sensors inside the housing. This will affect both sensor readings, their temperature readings usually raise. Therefore, the temperature reading provided by the RTS does not, at least in all conditions, represent the real ambient air temperature in an indoor space, even if a temperature reading of the main sensor is corrected by using a reading of the secondary sensor as a compensating factor.

Air flow condition is one of those conditions in which the temperature measuring becomes more challenging. Air flow inside the RTS may be restricted or decreased with isolation walls or corresponding structures, which effect to convection heat transfer, but they do not prevent conduction heat transfer. Therefore, even corrected indoor space temperature readings of an RTS are incorrect when the air flow is increased in indoor spaces, such as when an air conditioner or fan is turned on.

US20050092078 discloses a method comprising heating a thermistor for a limited time, measuring multiple temperatures of the thermistor at known time intervals, and calculating a mass airflow value as a function of the multiple temperatures and time intervals.

EP2899519 discloses a method for measuring a temperature outside a housing unit comprising measuring a first temperature inside the sealed housing of the housing unit, measuring a second temperature inside the sealed housing of the housing unit, and measuring an airflow speed outside the housing of the housing unit and along the front cover of the housing. Then a multiple of the difference between the first temperature and the second temperature is added to the first temperature, and a multiple of the product of airflow speed and the difference between the first temperature and the second temperature is further added.

### Summary

Now there has been invented an improved method and technical equipment, implementing the method, by which the above problems are alleviated. Various aspects of the invention include an air flow measuring method, an airflow compensated ambient temperature measuring method, an air flow measurement unit for an air flow compensated room temperature transmitter (RTS) and a computer readable medium comprising a computer program stored therein, which are characterized by what is stated in the independent claims. Various embodiments of the invention are disclosed in the dependent claims, such as an air flow compensated room temperature transmitter for temperature measuring of an indor space and to be used as a part of a Heating, Ventilation, and Air conditioning (HVAC) system.

According to a first aspect, there is provided an air flow measurement unit for an air flow compensated room temperature transmitter (RTS). The air flow measurement unit comprises a known mass, at least one resistive heating element, a thermistor, at least one heat sink, and data transmission means configured to transmit a resistance signal of the thermistor, for example, to a computing device of the air flow compensated room temperature transmitter. The at least one resistive heating element is configured to heat the known mass to an elevated temperature and the thermistor is configured to measure temperature of the heated known mass during cooling for calculation of a cooldown time of the known mass defined based on the measured resistances of the thermistor.

According to an example, the cooldown time is the time of cooling of the mass from a first temperature of the elevated temperature to a second temperature of the elevated temperature. According to an example, the cooldown time is the time of cooling of the mass from 90% to 10% of the elevated temperature. According to an example, the at least one resistive heating element is at least one heating resistor. According to an example, the resistance of the thermistor is measured using a resistance measurement circuit, a voltage divider, a current measurement circuit, or combination of these.

According to an embodiment, there is provided an air flow compensated room temperature transmitter comprising a housing, and inside the housing a main temperature sensor, a secondary temperature sensor, an air flow measurement unit according to the first aspect or any of its examples, and a computing device configured to receive and process temperature data of the main temperature sensor and the secondary temperature sensor and resistance data of the air flow measurement unit for determining a cooldown time of the known mass of the air flow measurement unit based on temperature values defined based on the measured resistance of the thermistor and an air flow compensated ambient temperature of the air flow compensated room temperature transmitter.

According to an example, the ambient temperature is determined using an air flow compensated ambient temperature compensation formula that is: Ambient temperature = main sensor reading + (secondary sensor reading - main sensor reading) * factor a + offset + cooldown time*factor b, wherein main sensor reading = a temperature reading of the main sensor, secondary sensor reading = a temperature reading of the secondary sensor, factors a and factor b = correction coefficients of the air flow compensated room temperature transmitter predetermined in a testing conditions, offset = a difference between the actual temperature of the space and temperature measured by the air flow compensated room temperature transmitter, and cooldown time = cooling time of a mass of an air flow measurement unit. According to an example, the air flow compensated room temperature transmitter further comprises a data transmitting means for receiving data from the main temperature sensor and the secondary temperature sensor and resistance data of the air flow measurement unit or transmitting the ambient temperature data to a HVAC device. According to an example, the air flow measurement unit also acts as a secondary temperature sensor. According to an example, the air flow compensated room temperature transmitter also comprises a display for displaying the air flow compensated ambient temperature or air flow amount or means for receiving user inputs. According to an example, the cooldown time is the time of cooling of the mass from a first temperature of the elevated temperature to a second temperature of the elevated temperature.

According to a second aspect, there is provided an air flow measuring method for an air flow measurement unit of an air flow compensated room temperature transmitter. The method comprises: heating a known mass of the air flow measurement unit to an elevated temperature by at least one resistive heating element of the air flow measurement unit, measuring resistances of a thermistor on the known mass during cooling of the known mass, transmitting the measured resistances to a computing device for determining a cooldown time of the known mass to be used for determining an air flow corrected ambient temperature of the air flow compensated room temperature transmitter.

According to an example, the measuring of the resistances is performed by using a resistance measurement circuit, a voltage divider, a current measurement circuit, or combination of these.

According to a third aspect, there is provided an air flow compensated ambient temperature measuring method of an air flow compensated room temperature transmitter. The method comprises receiving temperature data from a main temperature sensor and secondary temperature sensor of the air flow compensated room temperature transmitter, receiving resistance data measured during cooling of a known mass of an air flow measurement unit from an elevated temperature, determining a cooldown time of the known mass based on the receiver resistance data, and calculating an air flow corrected ambient temperature of the air flow compensated room temperature transmitter based on the cooldown time and temperature data.

According to an example, the ambient temperature is calculated using an air flow compensated ambient temperature compensation formula that is: Ambient temperature = main sensor reading + (secondary sensor reading - main sensor reading) * factor a + offset + cooldown time*factor b, wherein main sensor reading = a temperature reading of the main sensor, secondary sensor reading = a temperature reading of the secondary sensor, factors a and factor b = correction coefficients of the air flow compensated room temperature transmitter predetermined in a testing conditions, offset = a difference between the actual temperature of the space and temperature measured by the air flow compensated room temperature transmitter, and cooldown time = cooling time of a mass of an air flow measurement unit.

According to a fourth aspect, there is provided a computer program product embodied on a non-transitory computer readable medium, the computer program product comprising computer instructions that, when executed on at least one processor of a room temperature transmitter, is configured to perform the method according to the fourth aspect and its example.

Brief description of the drawings

In the following, various embodiments of the invention will be described in more detail with reference to the appended figures, in which

Fig. 1 shows an air flow measurement unit of an air flow compensated RTS according to an example embodiment,
Fig. 2 shows, as an example, a graphic of an air flow measurement cycle of the air flow measurement unit shown in figure 1,
Fig. 3 shows, as an example, a more detailed graphic of an air flow measurement cycle of the air flow measurement unit shown in figure 1,
Fig. 4 shows, as an example, an air flow compensated RTS according to an example embodiment, and
Fig. 5 shows an air flow measuring method of an air flow measurement unit of an air flow compensated room temperature transmitter according to an example embodiment.

Detailed description

Heating, ventilation, and air conditioning (HVAC) system controls temperature, humidity, and purity of the air in an enclosed indoor space. Its goal is to provide thermal comfort and acceptable indoor air quality. HVAC system includes heating equipment, ventilation equipment, and cooling or air-conditioning equipment. The HVAC system is an important part, for example, of residential structures such as single family homes, apartment buildings, hotels, and senior living facilities; medium to large industrial and office buildings and hospitals, where safe and healthy building conditions are regulated with respect to temperature, humidity and ventilation. HVAC system controls heating, cooling and air-ventilation based on temperature readings of a room or other indoor space measured by a room temperature transmitter, RTS, designed for automatic HVAC systems. A room temperature transmitter can also be used as such just for measuring and indicating ambient temperatures of an indoor space.

In order to control heating, cooling and air-ventilation correctly, HVAC system needs a room temperature transmitter that measures ambient temperature accurately. Accurate measuring is not always possible in indoor spaces especially if there are varying air flow conditions. Air flow inside a housing of an RTS increases temperature around sensors and thus temperature measurement readings of sensors. This is because the air flow pushes heat to sensors when flowing through the housing, for example, an air flow flowing downwards pushes heat from a top of the housing to sensors, and thus measured temperature readings will be too high. This is the case, for example, with existing RTSs, which do not take into account heating properties of an air flow inside the housing effecting temperature readings of the sensors of the RTS and causing erroneous readings. The size of an error and/or a change of an error of a measured temperature reading depends on, for example, how the air flow affects sensors i.e. how the air flow reaches the sensors and an amount of internal heating of electronics (thermal load inside the housing). Thus some temperature transmitter designs may be less affected by air flow. In general, large heat loads cause more problems and incorrect heat readings with air flow than small ones.

The effect of an air flow to temperature measurement readings is especially big, if the air flow is large or varying. The air flow may affect the measuring readings of RTS, even markable, even if its temperature measuring results are corrected by a correction factor. This is because this correction factor is defined under stable conditions when there is no air flow or just small constant air flow. Therefore, measurement accuracy of existing RTS may be valid only in very narrow conditions and may get lower in changing air flow conditions. This increases probability and size of erroneous temperature measurement readings.

Therefore, there is a need for an air flow compensated room temperature transmitter that takes into account the heating effects of air flow to temperature sensors of the RTS in its measurements by correcting temperature measurement readings with a formula, in which an air flow is compensated. For this the amount of air flow inside a housing of the RTS has to be measured. Disruption to heat transfer inside a housing can be estimated and correct ambient air temperature can be calculated using the measured air flow. This way an effect of an air flow to ambient temperature readings of an RTS can be minimized and the temperature measurement accuracy can be kept high and size of errors low even in changing air flow conditions. In this context the term "RTS" covers different kinds of room temperature transmitters, temperature transmitters, indoor temperature transmitters, and room temperature controllers.

The air flow compensated RTS has been designed for wall mounting on a wall surface or on a flush mounting box. Because the air flow compensated RTS takes into account air flow, it can be installed more freely. There is no need to find a place that is air flow free or almost air flow free. This is beneficial, because installation of the RTS to a place where air flow is minimal is not always possible, such as, for example, in small hotel rooms.

The air flow compensated RTS can also inform an installer that excessive air flow is detected and temperature measurement errors can be diagnosed more easily. Further, because there is no need to build barriers, walls or other protective means inside the housing of the RTS for preventing air flow from accessing to the sensors, the size of the RTS can be smaller. It is true that bigger housings of RTS may allow better thermal isolation for temperature sensors, but markets require small RTS devices.

The air flow compensated RTS solves problems caused to temperature measurement readings by an air flow, even when internal heating of the RTS is major i.e. the RTS comprises large thermal loads, major internal heating heats the sensors more, and its effect is even bigger when air flows through the RTS. Examples of RTSs with large thermal loads are room units with a display, a display backlight with a high power heat source and room temperature unit controllers, where display and outputs for thermal actuators are needed.

Using an air flow compensated temperature measurement method performed by an air flow compensated RTS in air flow conditions, can an air flow inside a housing of the RTS be measured and used as an input parameter for an air flow compensated temperature compensation formula. When air flow is included in compensation, temperature measurement errors of RTS devices can be kept within more accurate tolerances. Temperature measurement errors in air flow conditions using an air flow compensated RTS may usually vary only around +/-0.3C, when temperature measurement errors in air flow conditions using an existing RTS without air flow compensation can vary around +/-1.0°C. While the general i.e. common requirement for the room temperature measurement accuracy is +/-0.5°.

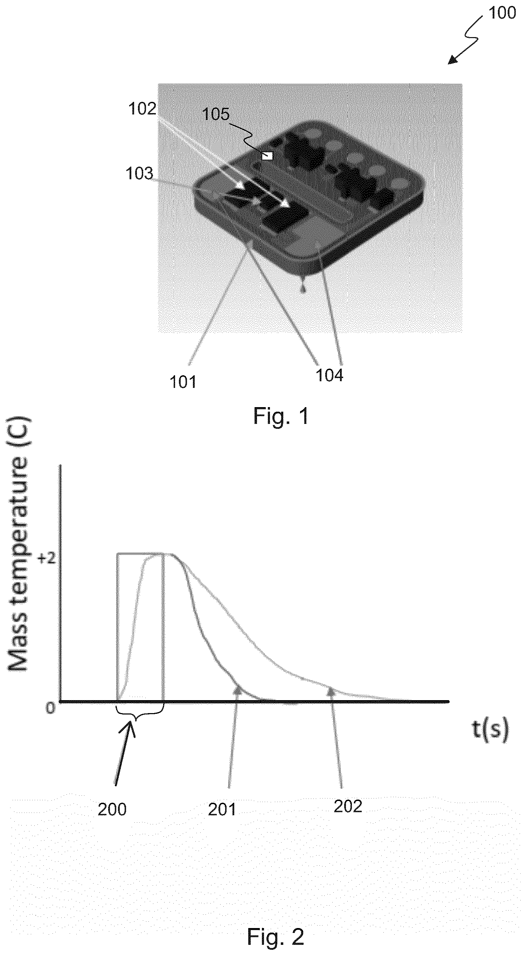

A cooldown time of a known mass is measured. Measured cooldown time is proportional to the air flow velocity through a housing of RTS. Air flow velocity can be calculated from the cooldown time of that known mass. Cooldown time is averaged over multiple measurements. This prevents short airburst affecting the measurement, such as a person passing by. Only a constant air flow, such as an air conditioning fan turned on, is noted. After the fan is turned off, cooldown time returns to no flow value i.e. as 0. An air flow measurement unit with a known mass is arranged inside a housing of an air flow compensated RTS (not shown). An air flow measurement unit 100 of an air flow compensated RTS is shown in figure 1. The air flow measurement unit 100 comprises a known mass 101, at least one heater i.e. a resistive heating element 102, for example, a heating resistor, a thermistor 103, at least one heat sink 104, and data transmission means 105 configured to transmit the resistance signal of thermistor 103 to a computing device of the air flow compensated RTS. Temperature of known mass 101 is determined based on the data transmission means 105 by the computing device of the air flow compensated RTS, by converting the received resistance to temperature using a voltage divider, current-to-voltage conversion, or resistance measurement circuit. The mass 101 may be made, for example, of circuit board FR4 and copper that is plated with e.g. tin or gold. The heat sink may be made of copper that is plated with tin or gold or any other suitable material.

Cooling of the mass 101 happens by convection to the air inside a housing of the RTS. Temperature of the mass 101 is measured using the thermistor 103. The cooldown time of the mass 101 i.e. heat transfer rate is proportional to convection heat-transfer coefficient of air.

Before cooling, the mass 101 is heated above ambient temperature, for example +2C above the air inside the housing using resistive heating elements 102. Then the mass 101 is let to cool down back to the starting temperature i.e. to the temperature inside the housing. This increase of temperature caused by heating may be marked by dt. The mass 101 is heated to temperature using, for example, a PI-controlled heating process. This ensures that elevated temperature can be reached accurately and fast, regardless of conditions.

Formula used for measuring heat transfer rate is as follows:

$$Q = hA\Delta T,$$

where

    Q=a heat transfer rate of the known mass of the air flow measurement unit,
    H= a convection heat-transfer coefficient of air,
    A= an exposed surface area i.e. area of at least one heat sink 104 and at least one resistive heating element 102, and
    $\Delta$T= a temperature difference (dt)

The heat transfer rate of the known mass 101 of the air flow measurement unit 100 is proportional with the cooldown time, and vice versa, and the cooldown time may be, for example, the time of cooling of the mass 101 from 90% to 10% of the temperature increase i.e. the elevated temperature, meaning that the cooldown time is, for example, if the mass 101 is heated 2°C above the temperature inside the casing, the measured cooldown time is a time that it takes for the temperature to decrease from 1.8°C to 0.2°C. Measured cooldown time is then normalized to no-air flow-condition cooldown time to determine air flow. The cooldown time may be also other than the above mentioned time of cooling of the mass 101 from 90% to 10% of the temperature increase. It may be, for example, from 80% to 10%, from 95% to 15% or any other desired and suitable range. In other words, the cooldown time is measured during cooling of the mass 101 from some point of the elevated temperature to some point above the ambient temperature i.e. cooling of the mass 101 from a first temperature of the elevated temperature to a second temperature of the elevated temperature. The cooldown time is determined/calculated by the computing device of the RTS. The temperature increase i.e. the elected temperature can also be something else than 2°C, it may be, for example, between 1°C to 4°C, or even more.

As the cooldown time is calculated, the air flow compensated ambient temperature reading may be calculated using an air flow compensated ambient temperature compensation formula that is as follows:

Ambient temperature = main sensor reading + (secondary sensor reading - main sensor reading) * factor a + offset + cooldown time*factor b

wherein

main sensor reading = a temperature reading of the main sensor,
secondary sensor reading = a temperature reading of the secondary sensor, factors a and factor b = correction coefficients of an RTS predetermined in a testing conditions, where the RTS was used in different environments and use cases/scenarios.
offset = difference between the actual temperature of the space and temperature measured by the RTS, and
cooldown time = cooling time of a mass of an air flow measurement unit.

Factors a and b are needed, because the heating of the RTS is not constant, but depends on a thermal load, for example whether the display backlight is on or off, in which cases the heating and power loss are different. As the power loss increases, the temperature difference between the main and secondary sensor increases, so with offset correction alone, the sensor reading would also increase compared to the actual ambient temperature. The offset is defined in the testing conditions, where the actual temperature is measured by an external temperature sensor arranged in the vicinity of the RTS.

Figure 2 shows, as an example, a graphic of an air flow measurement cycle of the air flow measurement unit 100 shown in figure 1. The air flow measurement is performed by measuring cooldown time of the mass 101. The reference number 200 indicates a heating time period, during which the heater 102 is on and is configured to heat the mass 101 2°C. The curve 202 indicates a cooldown time of the mass 101, when there is an air flow 0,2m/s and the curve 203 indicates a cooldown time of the mass 101, when there is no air flow and cooling of the mass 101 happens just by natural convection.

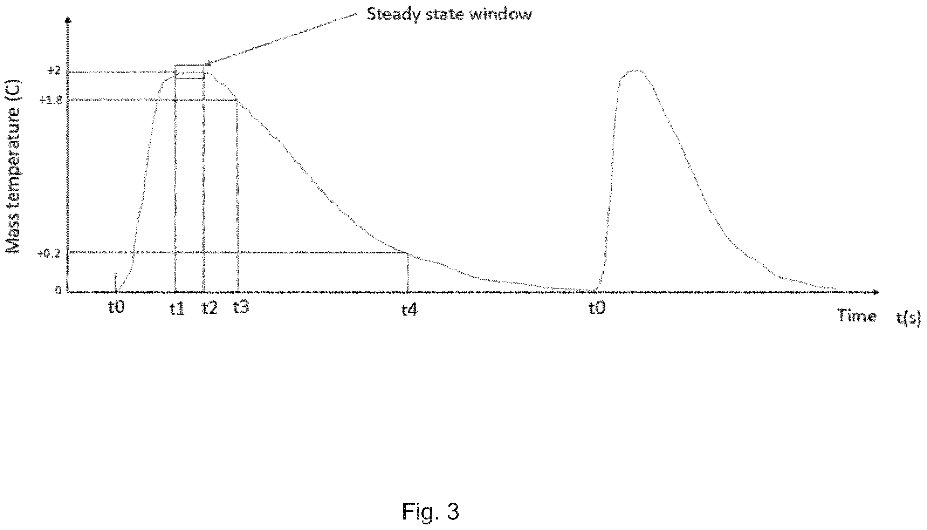

Figure 3 shows, as an example, a more detailed graphic of an air flow measurement cycle of the air flow measurement unit 100 shown in figure 1. The air flow measurement cycle starts at the time point t0 with the heating of mass 101 to the predetermined elevated temperature. In this example it is +2°C to an ambient air temperature. After the mass 101 temperature is reached this elevated temperature at the time point t1, the temperature of the mass 101 is kept at that constant temperature for time period t1-t2 to ensure that the whole mass 101 has heated and evenly heated in order to achieve a better measurement accuracy. This time period of keeping the mass 101 at the elevated temperature may be called, for example, as a steady state window. This cooldown time of the mass 101 is measured when temperature reaches/cools a start point t3 that is 10% below the elevated temperature i.e. the ambient air temperature +1.8C. Cooldown time measuring ends at an end point t4, when temperature reaches 90% below the elevated temperature i.e. the ambient air temperature +0.2C.

New cooldown time measurement cycle may begin again after the mass temperature has cooled back to the start temperature i.e. to the temperature inside the housing of the RTS; this starting time point is again t0. Time between air flow measurement cycles may be calculated as a multiple of a cooldown time, for example, if the cooldown time is 60 seconds, a new cycle air flow measurement cycle may be started after 5*60s has passed. This ensures that the whole mass 101 has reached the constant temperature +0°C to the ambient air. Air flow measurement may be done, for example, every couple of minutes and after a couple air flow measurements temperature readings of the RTS are correct ambient temperature readings.

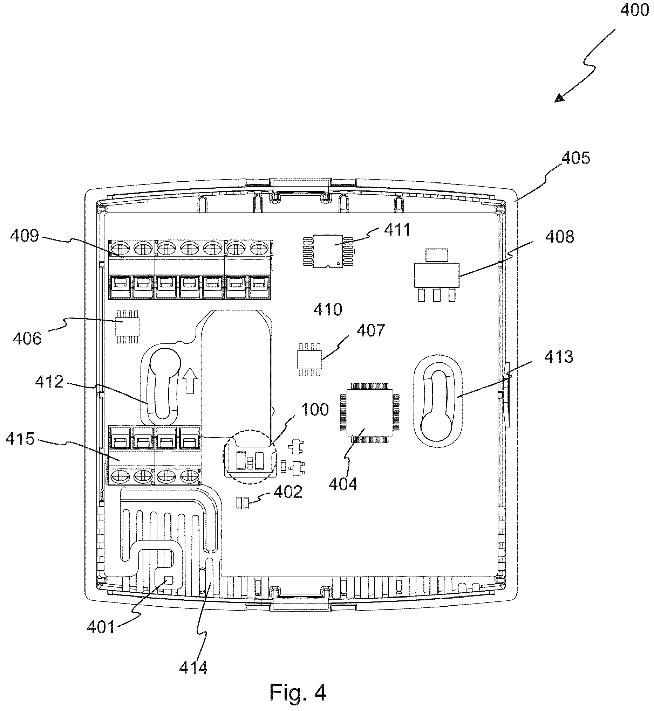

In figure 4 it is shown an air flow compensated (RTS 400) comprising a housing 405, a first (main) sensor 401 and a second i.e. secondary sensor 402 and an air flow measurement unit 100, a data transmitting means 406, for example, a wired or wireless data transmitter, and a computing device 404 configured to process received data i.e. temperature data of the first sensor and the secondary sensor and resistance data of a thermistor of the air flow measurement unit 100, which are connected to the computing device 404. The first sensor 401 and the secondary sensor 402 and the air flow measurement unit 100 are connected to the computing device 404 in such a way, in a wired or wireless manner, that the sensor data can be transmitted from them 401, 402, 100 to the computing device 404. The computing device 404 may be, for example, a microcontroller, MCU, and comprise at least one memory 407 for storing a computer program and sensor data, a processor for running the computer program, and one or more types of data transmission means for receiving sensor data and/or transmitting data such as configuration signals or messages for controlling temperature, ventilation or humidity. There is a thermal separation, for example, a slot in the PCB, between the main sensor 401 and the air flow measurement unit 100 i.e. they are not next to each other so that the heat does not transfer to the main sensor 401, when the mass of the air flow measurement unit 100 is heated when measuring cooldown time. In this example embodiment the secondary sensor 402 and the air flow measurement unit 100 are two separate means, however it is possible that the air flow measurement unit 100 also acts as a secondary temperature sensor in addition to be used for cooldown time measuring of the mass so that separate secondary sensor 402 is not needed at all. Ventilation openings 414 of the housing 405 are such that the air flow inside the housing 405 is configured to flow over sensors 401, 402 and to cool other components inside the housing 405.

The computing device 404 is configured to process measured data provided by temperature sensors 401, 402 and the air flow measurement unit 100, for calculating the air flow compensated ambient temperature reading. The RTS 400 may also comprise a display for displaying air flow corrected temperature readings and also possible air flow readings i.e. an amount of the air flow/second, as well as other means, such as means for receiving user inputs, for example, a keyboard, a touch screen, touch areas, soft keys, a microphone, a speaker, or other input/output mechanisms (not shown). The RTS 400 may further comprise user interface circuitry configured to control at least some functions of the user interface. The RTS 400 communicates with a HVAC system, it transmits by its data transmitting means 406 at least the calculated air flow compensated ambient temperature reading, but it may also transmit air flow readings, or temperature readings measured by the main and secondary sensor, over a data transmission network, for example, using WLAN (Wireless Local Area Network), Bluetooth, Modbus, some other digital data transfer bus, voltage or current signal, or GSM, CDMA or WCDMA technologies or future technologies, or other data network technologies.

The computing device 404 comprises at least one processor that may, for example, be embodied as one or more of various hardware processing means such as a coprocessor, a microprocessor, a controller, a digital signal processor (DSP), a processing element with or without an accompanying DSP, etc. The processor may include one or more processing cores configured to perform independently. The processor may be configured to execute instructions stored in at least one memory of the computing device 404 or otherwise accessible to the processor. The processor may, for example, be configured to analyse temperature and cooldown time data captured by the sensors 401, 402 and air flow measurement unit 100. The data transmitting means 406 may be any means such as a device or circuitry embodied in either hardware or a combination of hardware and software that is configured to receive and/or transmit data. The air flow compensated RTS 400 may further comprise a power supply 408 of the air flow compensated RTS 400, an output connector 409, a circuit board (PCB) 410, a data to voltage/current signal converter 411, mounting holes 412 and 413 for mounting the air flow compensated RTS 400 on the wall by fixing means, for example, screws, an input terminal 415, where, for example, an external temperature sensor can be connected.

The output connector 409 may be configured to connect the air flow compensated RTS 400, for example, to a HVAC system or auxiliary devices, such as to a heating valve/actuator. The data to voltage/current signal converter 411 is configured to convert data to suite connected device that is connected to the output connector 409. The parts 401, 402, 404 and 406-415 of the air flow compensated RTS 400 are arranged on the circuit board 410, which is arranged inside the housing 405. It should be noted that all the shown parts in the figure 4 may not be essential part of the air flow compensated (RTS) 400.

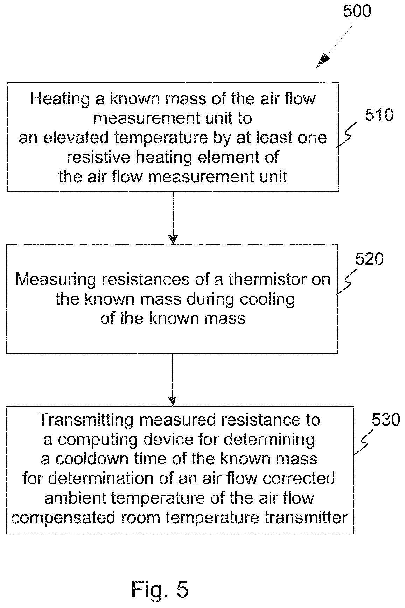

Figure 5 shows an air flow measuring method 500 of an air flow measurement unit of an air flow compensated room temperature transmitter according to an example embodiment. In step 510, a known mass of the air flow measurement unit is heated to an elevated temperature by at least one resistive heating element of the air flow measurement unit. In step 520, resistances of a thermistor on the known mass are measured during cooling of the known mass, for example, using a voltage divider. It is also possible to measure temperature of known mass instead of resistances of the thermistor. In step 530, measured resistance are transmitted to a computing device for determining a cooldown time of the known mass for determination of an air flow corrected ambient temperature of the air flow compensated room temperature transmitter.

The various example embodiments of the invention can be implemented with the help of computer program code that resides in a memory and causes the relevant device to carry out the invention. For example, a RTS may comprise circuitry and electronics for handling, receiving, and transmitting sensor and air flow measurement unit data, computer program code in a memory, and a processor that, when running the computer program code, causes the RTS device to carry out the features of an example embodiment.

It will be obvious that the present invention is not limited solely to the above-presented embodiments, but it can be modified within the scope of the appended claims.

## Claims

1. An air flow measurement unit (100) for an air flow compensated room temperature transmitter (RTS), the air flow measurement unit (100) comprises at least one resistive heating element (102), a thermistor (103), at least one heat sink (104), and data transmission means (105) configured to transmit a resistance signal of the thermistor (103), **characterized in that** the air flow measurement unit (100) further comprises a known mass (101) and that the at least one resistive heating element (102) is configured to heat the known mass (101) to an elevated temperature and the thermistor (103) is configured to measure temperature of the heated known mass (101) during cooling for calculation of a cooldown time of the known mass (101) defined based on the measured resistances of the thermistor (103).

2. An air flow measurement unit (100) according to claim 1, wherein the cooldown time is the time of cooling of the mass (101) from a first temperature of the elevated temperature to a second temperature of the elevated temperature.

3. An air flow measurement unit (100) according to claim 1, wherein the cooldown time is the time of cooling of the mass (101) from 90% to 10% of the elevated temperature.

4. An air flow measurement unit (100) according to any of claims 1 to 3, wherein the resistance of the thermistor (103) is measured using a resistance measurement circuit, a voltage divider, a current measurement circuit, or combination of these

5. An air flow compensated room temperature transmitter (400), the air flow compensated room temperature transmitter (400) comprises a housing (405), and inside the housing (405) a main temperature sensor (401), a secondary temperature sensor (402), an air flow measurement unit (100) according to any of the claims 1 to 4, and a computing device (404) configured to receive and process temperature data of the main temperature sensor (401) and the secondary temperature sensor (402) and resistance data of the air flow measurement unit (100) for determining a cooldown time of the known mass (101) of the air flow measurement unit (100) based on temperature values defined based on the measured resistance of the thermistor (103) and an air flow compensated ambient temperature of the air flow compensated room temperature transmitter (400), which air flow compensated ambient temperature is calculated based on the readings of the main and secondary temperature sensors (401, 402), and the cooldown time of the known mass (101).

6. An air flow compensated room temperature transmitter (400) according to claim 5, wherein the ambient temperature is determined using an air flow compensated ambient temperature compensation formula that is:

Ambient temperature = main sensor reading + (secondary sensor reading - main sensor reading) * factor a + offset + cooldown time*factor b,

wherein

main sensor reading = a temperature reading of the main sensor,
secondary sensor reading = a temperature reading of the secondary sensor,
factors a and factor b = correction coefficients of the air flow compensated room temperature transmitter (400) predetermined in a testing conditions,
offset = a difference between the actual temperature of the space and temperature measured by the air flow compensated room temperature transmitter (400), and
cooldown time = cooling time of the known mass (101) of the air flow measurement unit (100).

7. An air flow compensated room temperature transmitter (400) according to claim 5 or 6, wherein the air flow compensated room temperature transmitter (400) further comprises a data transmitting means (406) for receiving data from the main temperature sensor (401) and the secondary temperature sensor (402) and resistance data of the airflow measurement unit (100) or transmitting the ambient temperature data to a HVAC device.

8. An air flow compensated room temperature transmitter (400) according to any of claims 5 to 7, wherein the air flow measurement unit (100) also acts as a secondary temperature sensor.

9. An air flow compensated room temperature transmitter (400) according to any of claims 5 to 8, wherein the air flow compensated room temperature transmitter (400) also comprises a display for displaying the air flow compensated ambient temperature or air flow amount or means for receiving user inputs.

10. An air flow compensated room temperature transmitter (400) according to claim to any of claims 5 to 9, wherein the cooldown time is the time of cooling of the mass from a first temperature of the elevated temperature to a second temperature of the elevated temperature.

11. An air flow measuring method for an air flow measurement unit (100) of an air flow compensated room temperature transmitter (400), **characterized in that** the method comprises:

heating a known mass (101) of the air flow measurement unit (100) to an elevated temperature by at least one resistive heating element (102) of the air flow measurement unit (100),

measuring resistances of a thermistor on the known mass (101) during cooling of the known mass (101), and transmitting the measured resistances to a computing device for determining a cooldown time of the known mass (101) for determination of an air flow corrected ambient temperature of the air flow compensated room temperature transmitter (400).

12. An air flow measuring method according to claim 11, wherein the measuring of the resistances is performed by using a resistance measurement circuit, a voltage divider, a current measurement circuit, or combination of these.

13. An air flow compensated ambient temperature measuring method for an air flow compensated room temperature transmitter (400), the method comprises:

receiving temperature data from a main temperature sensor (401) and secondary temperature sensor (402) of the air flow compensated room temperature transmitter (400), **characterized in that** the method further comprises:

receiving resistance data measured during cooling of a known mass (101) of an air flow measurement unit (100) from an elevated temperature,

determining a cooldown time of the known mass (101) based on the received resistance data, and

calculating an air flow corrected ambient temperature of the air flow compensated room temperature transmitter (400) based on the cooldown time and temperature data.

14. An air flow compensated ambient temperature measuring method according to claim 13, wherein the ambient temperature is calculated using an air flow compensated ambient temperature compensation formula that is:

Ambient temperature = main sensor reading + (secondary sensor reading - main sensor reading) * factor a + offset + cooldown time*factor b

wherein

main sensor reading = a temperature reading of the main sensor,

secondary sensor reading = a temperature reading of the secondary sensor,

factors a and factor b = correction coefficients of the air flow compensated room temperature transmitter (400) predetermined in a testing conditions,

offset = a difference between the actual temperature of the space and temperature measured by the air flow compensated room temperature transmitter (400), and

cooldown time = cooling time of a mass of an air flow measurement unit.

15. A computer program product embodied on a non-transitory computer readable medium, the computer program product comprising computer instructions that, when executed on at least one processor of a room temperature transmitter, is configured to perform the method according to claim 13 or 14.

**Patentansprüche**

1. Luftstrommesseinheit (100) für einen luftstromkompensierten Raumtemperatursender (RTS), wobei die Luftstrommesseinheit (100) mindestens ein Widerstandsheizelement (102), einen Thermistor (103), mindestens eine Wärmesenke (104) und Datenübertragungsmittel (105) umfasst, die konfiguriert sind, um ein Widerstandssignal des Thermistors (103) zu übertragen, **dadurch gekennzeichnet, dass** die Luftstrommesseinheit (100) ferner eine bekannte Masse (101) umfasst und dass das mindestens eine Widerstandsheizelement (102) konfiguriert ist, um die bekannte Masse (101) auf eine erhöhte Temperatur zu erwärmen, und der Thermistor (103) konfiguriert ist, um die Temperatur der erwärmten bekannten Masse (101) während der Abkühlung zu messen, um eine Abkühlzeit der bekannten Masse (101) zu berechnen, die basierend auf den gemessenen Widerständen des Thermistors (103) definiert ist.

2. Luftstrommesseinheit (100) nach Anspruch 1, wobei die Abkühlzeit die Zeit der Abkühlung der Masse (101) von einer ersten Temperatur mit erhöhter Temperatur auf eine zweite Temperatur mit erhöhter Temperatur ist.

3. Luftstrommesseinheit (100) nach Anspruch 1, wobei die Abkühlzeit die Zeit der Abkühlung der Masse (101) von 90 % auf 10 % der erhöhten Temperatur ist.

4. Luftstrommesseinheit (100) nach einem der Ansprüche 1 bis 3, wobei der Widerstand des Thermistors (103) unter Verwendung einer Widerstandsmessschaltung, eines Spannungsteilers, einer Strommessschaltung oder einer Kombination davon gemessen wird.

5. Luftstromkompensierter Raumtemperatursender (400), wobei der luftstromkompensierte Raumtemperatursender (400) ein Gehäuse (405) und innerhalb des Gehäuses (405) einen Haupttemperatursensor (401), einen Sekundärtemperatursensor (402) und eine Luftstrommesseinheit (100) nach einem der Ansprüche 1 bis 4 umfasst, und eine Rechenvorrichtung (404), die konfiguriert ist, um Temperaturdaten des Haupttemperatursensors (401) und des sekundären Temperatursensors (402) und Widerstandsdaten der Luftstrommesseinheit (100) zu empfangen und zu verarbeiten, um eine Abkühlzeit der bekannten Masse (101) der Luftstrommesseinheit (100) basierend auf Temperaturwerten zu bestimmen, die basierend auf dem gemessenen Widerstand des Thermistors (103) und einer luftstromkompensierten Umgebungstemperatur des luftstromkompensierten Raumtemperaturtransmitters (400) bestimmt werden, wobei die luftstromkompensierte Umgebungstemperatur basierend auf den Lesungen der Haupt- und Sekundärtemperatursensoren (401, 402) und der Abkühlzeit der bekannten Masse (101) berechnet wird.

6. Luftstromkompensierter Raumtemperatursender (400) nach Anspruch 5, wobei die Umgebungstemperatur unter Verwendung einer luftstromkompensierten Umgebungstemperaturkompensationsformel bestimmt wird, die Folgendes ist:

Umgebungstemperatur = Lesung des Hauptsensors + (Lesung des Nebensensors - Lesung des Hauptsensors) * Faktor a + Versatz + Abkühlzeit*Faktor b, wobei

Lesung des Hauptsensors = eine Temperaturlesung des Hauptsensors,
Lesung des Sekundärsensors = eine Temperaturlesung des Sekundärsensors,
Faktoren a und Faktor b = Korrekturkoeffizienten des luftstromkompensierten Raumtemperatursenders (400), die unter Prüfbedingungen vorgegeben sind,
Versatz = eine Differenz zwischen der tatsächlichen Raumtemperatur und der vom luftstromkompensierten Raumtemperatursender (400) gemessenen Temperatur, und
Abkühlzeit = Abkühlzeit der bekannten Masse (101) der Luftstrommesseinheit (100).

7. Luftstromkompensierter Raumtemperatursender (400) nach Anspruch 5 oder 6, wobei der luftstromkompensierte Raumtemperatursender (400) ferner Datenübertragungsmittel (406) zum Empfangen von Daten von dem Haupttemperatursensor (401) und dem sekundären Temperatursensor (402) und von Widerstandsdaten der Luftstrommesseinheit (100) oder zum Übertragen der Umgebungstemperaturdaten an eine HVAC-Vorrichtung umfasst.

8. Luftstromkompensierter Raumtemperatursender (400) nach einem der Ansprüche 5 bis 7, wobei die Luftstrommesseinheit (100) auch als sekundärer Temperatursensor wirkt.

9. Luftstromkompensierter Raumtemperatursender (400) nach einem der Ansprüche 5 bis 8, wobei der luftstromkompensierte Raumtemperatursender (400) auch eine Anzeige zum Anzeigen der luftstromkompensierten Umgebungstemperatur oder Luftstrommenge oder Mittel zum Empfangen von Benutzereingaben umfasst.

10. Luftstromkompensierter Raumtemperatursender (400) nach einem der Ansprüche 5 bis 9, wobei die Abkühlzeit die Zeit der Abkühlung der Masse von einer ersten Temperatur der erhöhten Temperatur auf eine zweite Temperatur der erhöhten Temperatur ist.

11. Luftstrommessverfahren für eine Luftstrommesseinheit (100) eines luftstromkompensierten Raumtemperatursenders (400), **dadurch gekennzeichnet, dass** das Verfahren Folgendes umfasst:

Erhitzen einer bekannten Masse (101) der Luftstrommesseinheit (100) auf eine erhöhte Temperatur durch mindestens ein Widerstandsheizelement (102) der Luftstrommesseinheit (100),
Messen der Widerstände eines Thermistors an der bekannten Masse (101) während der Abkühlung der bekannten Masse (101) und
Senden der gemessenen Widerstände an eine Rechenvorrichtung zum Bestimmen einer Abkühlzeit der bekannten Masse (101) zur Bestimmung einer luftstromkorrigierten Umgebungstemperatur des luftstromkompensierten Raumtemperatursenders (400).

12. Luftstrommessverfahren nach Anspruch 11, wobei das Messen der Widerstände unter Verwendung einer Widerstandsmessschaltung, eines Spannungsteilers, einer Strommessschaltung oder einer Kombination davon erfolgt.

13. Luftstrommessverfahren mit kompensierter Umgebungstemperatur für einen luftstromkompensierten Raumtemperatursender (400), wobei das Verfahren Folgendes umfasst:

Empfangen von Temperaturdaten von einem Haupttemperatursensor (401) und einem Sekundärtemperatursensor (402) des luftstromkompensierten Raumtemperatursenders (400),
**dadurch gekennzeichnet, dass** das Verfahren ferner Folgendes umfasst:

Empfangen von Widerstandsdaten, die während der Abkühlung einer bekannten Masse (101) einer Luftstrommesseinheit (100) von einer erhöhten Temperatur gemessen wurden, Bestimmen einer Abkühlzeit der bekannten Masse (101) basierend auf den empfangenen Widerstandsdaten, und
Berechnen einer luftstromkorrigierten Umgebungstemperatur des luftstromkompensierten Raumtemperatursenders (400) basierend auf der Abkühlzeit und den Temperaturdaten.

14. Luftstrommessverfahren mit kompensierter Umgebungstemperatur nach Anspruch 13, wobei die Umgebungstemperatur unter Verwendung einer Kompensationsformel für luftstromkompensierte Umgebungstemperatur berechnet wird, die Folgendes ist:

Umgebungstemperatur = Lesung des Hauptsensors + (Lesung des Nebensensors - Lesung des Hauptsensors) * Faktor a + Versatz + Abkühlzeit*Faktor b, wobei

Lesung des Hauptsensors = eine Temperaturlesung des Hauptsensors,
Lesung des Sekundärsensors = eine Temperaturlesung des Sekundärsensors,
Faktoren a und Faktor b = Korrekturkoeffizienten des luftstromkompensierten Raumtemperatursenders (400), die unter Prüfbedingungen vorgegeben sind,
Versatz = eine Differenz zwischen der tatsächlichen Raumtemperatur und der vom luftstromkompensierten Raumtemperatursender (400) gemessenen Temperatur, und
Abkühlzeit = Abkühlzeit einer Masse einer Luftstrommesseinheit.

15. Computerprogrammprodukt, das auf einem nicht-übertragbaren, computerlesbaren Medium ausgeführt ist, wobei das Computerprogrammprodukt Computeranweisungen umfasst, die, wenn sie auf mindestens einem Prozessor eines Raumtemperatursenders ausgeführt werden, konfiguriert sind, um das Verfahren nach Anspruch 13 oder 14 durchzuführen.

**Revendications**

1. Unité de mesure de débit d'air (100) pour un transmetteur de température ambiante à compensation de débit d'air (RTS), l'unité de mesure de débit d'air (100) comprend au moins un élément chauffant résistif (102), une thermistance (103), au moins un dissipateur thermique (104), et des moyens de transmission de données (105) configurés pour transmettre un signal de résistance de la thermistance (103), **caractérisée en ce que** l'unité de mesure de débit d'air (100) comprend également une masse connue (101) et **en ce que** l'au moins un élément chauffant résistif (102) est configuré pour chauffer la masse connue (101) à une température élevée et la thermistance (103) est configurée pour mesurer la température de la masse connue chauffée (101) pendant le refroidissement pour le calcul d'un temps de refroidissement de la masse connue (101) défini sur la base des résistances mesurées de la thermistance (103).

2. Unité de mesure de débit d'air (100) selon la revendication 1, dans laquelle le temps de refroidissement est le temps de refroidissement de la masse (101) d'une première température de la température élevée à une seconde température de la température élevée.

3. Unité de mesure de débit d'air (100) selon la revendication 1, dans laquelle le temps de refroidissement est le temps de refroidissement de la masse (101) de 90 % à 10 % de la température élevée.

4. Unité de mesure de débit d'air (100) selon l'une quelconque des revendications 1 à 3, dans laquelle la résistance de la thermistance (103) est mesurée à l'aide d'un circuit de mesure de résistance, d'un diviseur de tension, d'un circuit de mesure de courant, ou d'une combinaison de ceux-ci.

5. Transmetteur de température ambiante à compensation de débit d'air (400), le transmetteur de température ambiante à compensation de débit d'air (400) comprend un boîtier (405), et à l'intérieur du boîtier (405) un capteur de température principal (401), un capteur de température secondaire (402), une unité de mesure de débit d'air (100) selon l'une quelconque des revendications 1 à 4, et un dispositif de calcul (404) configuré pour recevoir et traiter des données de température du capteur de température principal (401) et du capteur de température secondaire (402) et des données de résistance de l'unité de mesure de débit d'air (100) pour déterminer un temps de refroidissement de la masse connue (101) de l'unité de mesure de débit d'air (100) sur la base des valeurs de température définies sur la base de la résistance mesurée de la thermistance (103) et d'une température ambiante à compensation de débit d'air du transmetteur de température ambiante à compensation de débit d'air (400), laquelle température ambiante à compensation de débit d'air est calculée sur la base des lectures des capteurs de température principal et secondaire (401, 402), et du temps de refroidissement de la masse connue (101).

6. Transmetteur de température ambiante à compensation de débit d'air (400) selon la revendication 5, dans lequel la température ambiante est déterminée à l'aide d'une formule de compensation de température ambiante à compensation de débit d'air qui est :

Température ambiante = lecture du capteur principal + (lecture du capteur secondaire - lecture du capteur principal) * facteur a + décalage + temps de refroidissement * facteur b,

dans lequel

  lecture du capteur principal = une lecture de température du capteur principal,
  lecture du capteur secondaire = une lecture de température du capteur secondaire,
  facteurs a et facteur b = coefficients de correction du transmetteur de température ambiante à compensation de débit d'air (400) prédéterminé dans des conditions de test,
  décalage = une différence entre la température réelle de l'espace et la température mesurée par le transmetteur de température ambiante à compensation de débit d'air (400), et
  temps de refroidissement = temps de refroidissement de la masse connue (101) de l'unité de mesure de débit d'air (100).

7. Transmetteur de température ambiante à compensation de débit d'air (400) selon la revendication 5 ou 6, dans lequel le transmetteur de température ambiante à compensation de débit d'air (400) comprend également un moyen de transmission de données (406) pour recevoir des données du capteur de température principal (401) et du capteur de température secondaire (402) et des données de résistance de l'unité de mesure de débit d'air (100) ou transmettre les données de température ambiante à un dispositif CVC.

8. Transmetteur de température ambiante à compensation de débit d'air (400) selon l'une quelconque des revendications 5 à 7, dans lequel l'unité de mesure de débit d'air (100) agit aussi comme capteur de température secondaire.

9. Transmetteur de température ambiante à compensation de débit d'air (400) selon l'une quelconque des revendications 5 à 8, dans lequel le transmetteur de température ambiante à compensation de débit d'air (400) comprend aussi un affichage pour afficher la température ambiante à compensation de débit d'air ou la quantité de débit d'air ou des moyens pour recevoir des entrées utilisateur.

10. Transmetteur de température ambiante à compensation de débit d'air (400) selon l'une quelconque des revendications 5 à 9, dans lequel le temps de refroidissement est le temps de refroidissement de la masse d'une première température de la température élevée à une seconde température de la température élevée.

11. Procédé de mesure de débit d'air pour une unité de mesure de débit d'air (100) d'un transmetteur de température ambiante à compensation de débit d'air (400), **caractérisé en ce que** le procédé comprend :

  la chauffe d'une masse connue (101) de l'unité de mesure de débit d'air (100) à une température élevée par au moins un élément chauffant résistif (102) de l'unité de mesure de débit d'air (100),

la mesure de résistances d'une thermistance sur la masse connue (101) pendant le refroidissement de la masse connue (101), et

la transmission des résistances mesurées à un dispositif informatique pour déterminer un temps de refroidissement de la masse connue (101) pour déterminer une température ambiante corrigée du débit d'air de l'émetteur de température ambiante à compensation de débit d'air (400).

12. Procédé de mesure de débit d'air selon la revendication 11, dans lequel la mesure des résistances est réalisée à l'aide d'un circuit de mesure de résistance, un diviseur de tension, un circuit de mesure de courant, ou une combinaison de ceux-ci.

13. Procédé de mesure de température ambiante à compensation de débit d'air pour un transmetteur de température ambiante à compensation de débit d'air (400), le procédé comprenant :

la réception de données de température provenant d'un capteur de température principal (401) et d'un capteur de température secondaire (402) du transmetteur de température ambiante à compensation de débit d'air (400),

**caractérisé en ce que** le procédé comprend également :

la réception de données de résistance mesurées pendant le refroidissement d'une masse connue (101) d'une unité de mesure de débit d'air (100) à partir d'une température élevée,

la détermination d'un temps de refroidissement de la masse connue (101) sur la base des données de résistance reçues, et

le calcul d'une température ambiante corrigée de débit d'air du transmetteur de température ambiante à compensation de débit d'air (400) sur la base du temps de refroidissement et des données de température.

14. Procédé de mesure de température ambiante à compensation de débit d'air selon la revendication 13, dans lequel la température ambiante est calculée à l'aide d'une formule de compensation de température ambiante à compensation de débit d'air qui est :

Température ambiante = lecture du capteur principal + (lecture du capteur secondaire - lecture du capteur principal) * facteur a + décalage + temps de refroidissement * facteur b

dans lequel

lecture du capteur principal = une lecture de température du capteur principal,

lecture du capteur secondaire = une lecture de température du capteur secondaire,

facteurs a et facteur b = coefficients de correction du transmetteur de température ambiante à compensation de débit d'air (400) prédéterminé dans des conditions de test,

décalage = une différence entre la température réelle de l'espace et la température mesurée par le transmetteur de température ambiante à compensation de débit d'air (400), et

temps de refroidissement = temps de refroidissement d'une masse d'une unité de mesure de débit d'air.

15. Produit de programme informatique incorporé sur un support lisible par ordinateur non transitoire, le produit de programme informatique comprenant des instructions informatiques qui, lorsqu'elles sont exécutées sur au moins un processeur d'un transmetteur de température ambiante, sont configurées pour réaliser le procédé selon la revendication 13 ou 14.

Fig. 1

Fig. 2

Steady state window

Mass temperature (C)

Time   t(s)

Fig. 3

Fig. 4

500

Heating a known mass of the air flow
measurement unit to
an elevated temperature by at least one
resistive heating element of
the air flow measurement unit

510

Measuring resistances of a thermistor on
the known mass during cooling
of the known mass

520

Transmitting measured resistance to
a computing device for determining
a cooldown time of the known mass
for determination of an air flow corrected
ambient temperature of the air flow
compensated room temperature transmitter

530

Fig. 5

**EP 4 425 134 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050092078 A

- EP 2899519 A